# FASCICULE DE BREVET EUROPEEN

(11) **EP 2 683 509 B1**
(45) Date de publication et mention de la délivrance du brevet: **27.02.2019**
(21) Numéro de dépôt: 12720222.4
(22) Date de dépôt: 06.03.2012
(51) Int. Cl.: B22F 3/105, B22F 5/04, B22F 5/00, B22F 7/06, B22F 7/08, B23P 6/00

(54) **PROCÉDÉ DE RECHARGEMENT LOCAL DE PIÈCE EN SUPERALLIAGE ENDOMMAGÉE**
VERFAHREN ZUR LOKALEN REPARATUR EINES BESCHÄDIGTEN SUPERLEGIERUNG TEILS
PROCESS FOR LOCAL REPAIR OF A DAMAGED SUPERALLOY PART

(30) Priorité: 07.03.2011 FR 1151832
(43) Date de publication de la demande: 15.01.2014
(73) Titulaire: Safran Aircraft Engines, 75015 Paris (FR)
(72) Inventeur: HUGOT, Juliette, F-86130-Jaunay-Clan (FR); MENUEY, Justine, F-74000 Annecy (FR)
(74) Mandataire: Gevers & Orès
(86) Numéro de dépôt international: PCT/FR2012/050459
(87) Numéro de publication internationale: WO 2012/120231

(56) Documents cités:
- FR-A1- 2 932 496
- FR-A1- 2 941 965
- JP-A- 2003 342 617
- US-B1- 6 384 365
- US-B2- 7 343 676
- MONCEAU D ET AL: "Thermal Barrier Systems and Multi-Layered Coatings Fabricated by Spark Plasma Sintering for the Protection of Ni-Base Superalloys", MATERIALS SCIENCE F, TRANS TECH PUBLICATIONS LTD- SWITZERLAND, CH , vol. 654-656 1 January 2010 (2010-01-01), pages 1826-1831, XP009152293, ISSN: 0255-5476 Retrieved from the Internet: URL:10.4028/www.scientific.net/MSF.654-656 .1826 [retrieved on 2010-01-01]

## Description

### DOMAINE TECHNIQUE

L'invention concerne un procédé de rechargement local de pièce endommagée en superalliage ayant subi de fortes contraintes d'utilisation, par exemple par corrosion, érosion ou par usure. Elle s'applique plus particulièrement, mais non exclusivement, aux pièces de turbine.

Le domaine de l'invention est celui des matériaux réfractaires en superalliage à base de nickel. Ces matériaux sont aptes à constituer des pièces thermomécaniques, en particulier des pièces de turbine à gaz dans le domaine de l'aéronautique, telles que des aubes mobiles de redresseur ou de distributeur, leur plateforme, leur pied ou autre équipement, particulièrement résistantes à la corrosion et à l'oxydation.

Mais ces pièces subissent des contraintes de température et de pression telles que de la matière disparaît, ce qui nécessite réparation par rechargement de matière. Cette réparation consiste en une remise aux dimensions initiales de la pièce en conservant le même type de matériau constitutif ou de composition chimique proche.

### ÉTAT ANTERIEUR DE LA TECHNIQUE

Pour cela, il est connu de réparer localement par soudage à l'arc lorsque la réparation est limitée à des zones non critiques de la pièce et de faible étendue.

Pour des réparations plus importantes ou plus critiques, une solution consiste à venir apporter de la matière, sous forme solide, au niveau de la zone à recharger. La matière se présente alors en préformes découpées à partir de plaque, ou de ruban, réalisée à partir d'un mélange de poudres de superalliage et de brasure porté à haute température dans un four adapté. Ce mélange est ainsi fritté du fait des eutectiques à bas point de fusion engendrés par le mélange des poudres. Les « frittés » ainsi obtenus sont ensuite accostés sur les zones de la pièce à réparer, préalablement nettoyées, et le tout est porté en température. Des phénomènes de brasage-diffusion interviennent alors et le fritté est brasé à la surface de la pièce.

Dans cette méthode, la plaque frittée est découpée au jet d'eau pour constituer des préformes planes de configuration bidimensionnelle 2D. Après brasage, une remise au profil de la pièce est effectuée par usinage des zones planes afin de lui redonner une géométrie proche de la géométrie originelle et conférer ainsi les propriétés aérodynamiques adéquates.

Ce procédé implique la présence de poudre de brasure, donc d'éléments fondants répartis dans l'intégralité de l'épaisseur du fritté. Or la présence d'éléments fondants a un impact négatif sur les performances thermomécaniques.

De plus, il ne permet de réaliser que des préformes frittées bidimensionnelles, avec une épaisseur constante quelle que soit la zone du fritté. Or, sur les versions plus récentes des pièces visées, il serait avantageux de disposer de frittés ayant une épaisseur variée dans certaines zones. La méthode actuelle ne permet pas une telle précision.

En outre, l'élaboration du fritté passe par une succession de nombreuses étapes, impliquant un coût de production non négligeable. De plus, une grande partie de la matière est perdue, les frittés étant issus de plaque dont la majeure partie est jetée.

En outre US 6384365 (B1) divulgue un procédé de rechargement par frittage flash pour assembler deux ou plusieurs parties de pièce.

### EXPOSÉ DE L'INVENTION

L'invention vise à pallier les inconvénients de l'état de la technique en proposant de réaliser de manière simple, rapide et efficace des frittés précis en 3 dimensions (3D) de forme sensiblement proche de celle de la pièce originelle. Pour ce faire, l'invention fait intervenir un frittage flash produit par la technologie SPS (initiales de « Spark Plasma Sintering », c'est-à-dire « frittage flash de plasma » en terminologie anglaise).

La technologie SPS combine, simultanément, l'application d'une pression uniaxe élevée et des impulsions de courant continu de forte intensité provoquant une élévation de température quasi immédiate et uniforme. Cette technologie est connue dans le domaine de la métallurgie des poudres qui permet, par agglomération et compaction, de fabriquer des pièces métalliques ou d'oxydes métalliques à partir de poudres. En particulier, la mise en oeuvre de la technologie flash SPS permet de fabriquer des pièces à microstructures particulières et maîtrisables.

Plus précisément, la présente invention a pour objet un procédé de rechargement local de pièce en superalliage. Le procédé consiste en des étapes décrites dans l'objet de la revendication 1.

Avantageusement, le cycle de frittage flash est réglé en température, en pression et en durée avec une montée en température d'au moins 600°C/min, un palier de température sensiblement entre 1000 et 2000°C et un palier de pression sensiblement entre 10 et 100 MPa.

Dans une étape ultérieure de brasage, la face de brasure de la préforme réalisée est mise en contact avec la zone de la pièce à recharger. Puis, par chauffage de la préforme et de la pièce accolée dans un four approprié à une température au moins égale à la température de fusion de la brasure, la face de brasure est ancrée par diffusion des éléments fondants de la brasure dans la pièce à recharger. L'abattement mécanique de la pièce dans la zone rechargée est alors sensiblement diminué voire supprimé.

Dans des formes de réalisation particuliers :
- des couches de protection métallique et de barrière thermique sont déposées sur la couche de superalliage pendant la phase de préparation ;
- la couche de protection métallique est constituée d'au moins une feuille de matrice de composition Ni, Pt, Hf, Y, Zr, Al, Si, Cu, Ag et/ou Au, et/ou de compositions Ni-AI, Ni-Pt-AI et/ou Ni-Al-Zr.
- la barrière thermique est composée de zircone stabilisée à 6-8% massique d'Yttrine (barrière thermique de composition ZrO₂ - 6-8Y₂O₃).

### BRÈVE DESCRIPTION DES FIGURES

D'autres caractéristiques et avantages de l'invention ressortiront à la lecture de la description qui suit et qui se rapporte à un exemple de réalisation, en référence aux figures annexées qui illustrent :
- la figure 1, une vue en coupe schématique d'un exemple de référence d'assemblage de couches dans un moule de matrice SPS ayant une forme d'empreinte correspondant à la pièce originelle ;
- la figure 2, une vue en coupe schématique partielle de cet assemblage après frittage flash ;
- la figure 3, une vue en coupe schématique d'un exemple selon l'invention d'assemblage de couches dans un moule de matrice SPS ayant une forme d'empreinte correspondant à la partie de rechargement de pièce ;
- la figure 4, une vue en coupe schématique partielle de cet assemblage après frittage flash, et
- la figure 5, une vue en coupe schématique de cet assemblage après brasage sur la pièce à recharger.

### EXPOSÉ DETAILLÉ

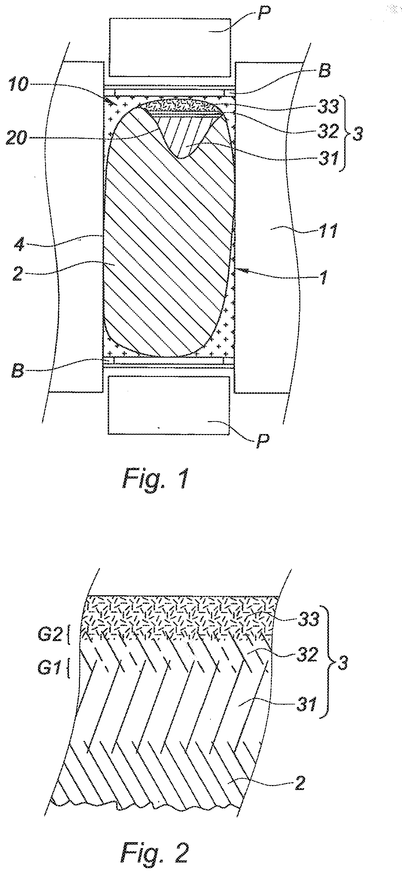

La figure 1 représente un exemple de référence et illustre une vue schématique en coupe partielle verticale d'un moule 1 formé dans une chambre 10 de matrice creuse cylindrique 11 en graphite d'une enceinte SPS (non représentée). Des bornes de tensions électriques « B » et des pistons « P » de compression sont réglés pour permettre une mise en pression et un passage de courant pulsé traversant le moule selon des cycles de frittage flash.

Ce moule 1 a la forme d'empreinte correspondant à la pièce originelle en superalliage. La pièce endommagée 2 est introduite dans ce moule après un nettoyage de la surface externe, en particulier de la face 20 à partir de laquelle manque ou s'est érodée, corrodée ou oxydée une partie de la pièce. Sur cette face 20, un assemblage 3 de couches successives ou strates de matériaux est déposé: une couche de poudre de superalliage 31, une strate de métal de protection 32, constitué de feuilles de platine et d'aluminium, et une barrière thermique 33, formée d'une poudre de céramique de zircone stabilisée à l'yttrine, de formule ZrO₂Y₂O₃.

Suivant la forme géométrique de la pièce à recharger, les couches ou strates peuvent être déposées sur la pièce endommagée 2 avant leur intégration dans le moule 1 ou, alternativement, l'assemblage 3 peut être injecté dans ce moule à partir de buses. La pièce et l'assemblage sont disposés dans une chemise en graphite 4 elle-même placée dans le moule pour permettre l'application d'une pression localisée. Ces différentes méthodes de formation de l'assemblage multicouche 3 sur la pièce 1 sont de la compétence de la personne de l'art.

Pendant l'opération de frittage flash, les cycles de réglage en température et pression suivent des diagrammes programmés selon des valeurs de tension électrique et de pression prédéterminées. Les programmes prévoient des paliers de température pouvant aller jusqu'à 2 000 °C avec un courant électrique de traversée de moule pouvant atteindre 8 000 A.

Le courant imposé permet une montée en température très rapide, par exemple de l'ordre de 600 °C/min ou plus. Cette rapidité évite le grossissement des grains lors du frittage et donc est particulièrement indiqué pour la synthèse de nanomatériaux. De plus, cette rapidité permet également de doser la diffusion : comme illustré par la figure 2, l'élaboration de l'assemblage multicouche 3 est préservée tout en favorisant l'apparition de gradients de composition G1 et G2 à l'interface des couches et strates 31-32-33, ainsi qu'un ancrage par continuum de matière entre la strate de superalliage frittée 31 et la pièce à recharger 2.

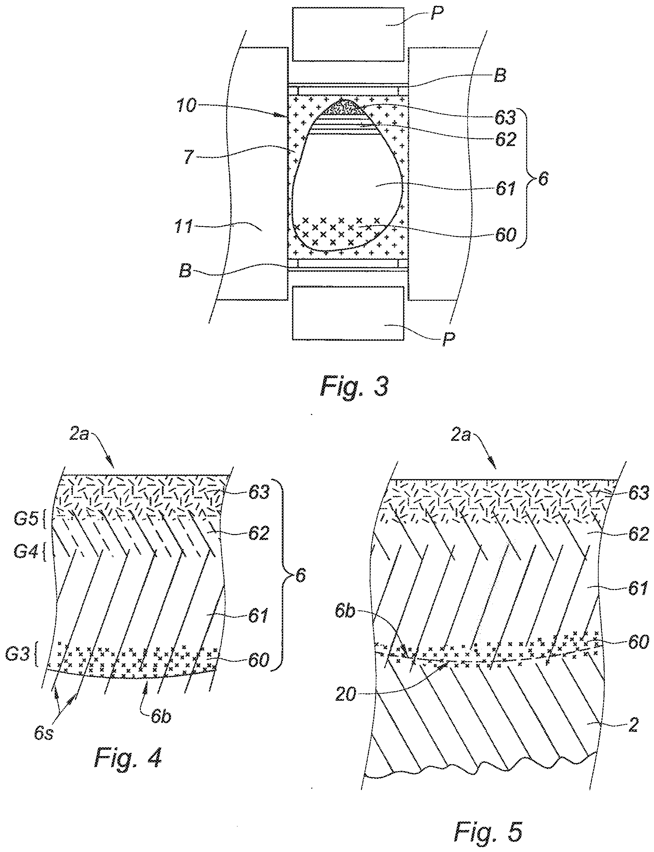

En référence à la figure 3, la vue en coupe schématique illustre un exemple selon l'invention d'assemblage de couches 6 dans un moule 7 formé dans la chambre 10 de matrice SPS 11. Dans cet exemple selon l'invention, le moule 7 a une forme d'empreinte correspondant à la partie de rechargement complétant la pièce endommagée pour reconstituer la forme de la pièce originelle.

Selon les méthodes décrites ci-dessus, l'empreinte est remplie par des dépôts successifs de couches et de strates formant l'assemblage 6 ou ensemble multicouche: une couche de poudre de brasure 60 - apte à correspondre à la face de la pièce à recharger - une couche de poudre de superalliage 61, une strate de protection 62 constitué de feuilles de composés Ni-Al-Zr et une barrière thermique 63, formée d'une poudre de céramique de zircone stabilisée à l'yttrine, de formule ZrO₂Y₂O₃, et dopée à l'oxyde de gadolinium Gd₂O₃.

En référence à la figure 4, l'étape de frittage réalisée dans les conditions définies plus haut permet d'obtenir une préforme 2a présentant des gradients de composition G3, G4 et G5 dans l'ensemble multicouche 6, entre les couches ou strates 60-61-62-63. La couche de brasure frittée 60 présente une face externe 6b apte à être solidarisée sur la face endommagée de la pièce à recharger et du matériau de superalliage 6s apparaît en surface de la préforme 2a, dans la face de brasure 6b.

Dans une étape ultérieure de brasage illustrée par la figure 5, la face de brasure 6b de la préforme 2a est mise en contact avec la zone complémentaire de la pièce 2 à recharger, à savoir la face 20. Puis, la préforme 2a et la pièce accolée 2 sont chauffées dans un four approprié à une température au moins égale à la température de fusion de la brasure, par exemple environ 700°C pour une brasure à base d'argent. La face de brasure 6b s'ancre alors par diffusion des éléments fondants de la brasure dans la pièce à recharger 2 à travers sa face 20.

Il est par exemple possible de déposer plusieurs couches initiales de céramiques compatibles chimiquement et thermiquement. Par ailleurs, les couches de protection métallique et de barrière thermique peuvent être ajoutées ultérieurement dans une étape de dépôt ultérieur sur l'ensemble de la pièce une fois reconstituée. Dans ce cas, les couches de protection et de résistance thermique sont avantageusement préalablement décapées en surface de la pièce endommagée, et le frittage est réalisé sans ces couches. Les couches sont ensuite déposées et solidarisées par frittage sur l'ensemble de la pièce reconstituée.

## Revendications

1. Procédé de rechargement local d'une pièce en superalliage endommagée (2) à recharger, **caractérisé en ce qu'**il comprend chronologiquement les étapes suivantes :
- une étape préparatoire consistant à :
• réaliser un moule (7) dans une matrice (11) d'enceinte de frittage flash, le moule (7) étant destiné à la formation par frittage flash d'une préforme (2a) de rechargement de la pièce endommagée (2),
• introduire dans le moule (7) un ensemble multicouche (6) constitué d'une couche de poudre de brasure (60) et d'au moins une couche (61) à base de poudre de superalliage,
- une étape de frittage consistant à mettre en pression et à déclencher un passage de courant pulsé induisant une montée rapide en température selon un cycle de frittage flash réglé en température, en pression et en durée, avec au moins un palier de température et un palier de pression, cette étape de frittage de l'ensemble multicouche (6) conduisant à la formation d'une préforme (2a) présentant des gradients de composition (G3, G4, G5) dans l'ensemble multicouche (6) ainsi fritté, ladite préforme (2a) présentant une face de brasure (6b) apte à être solidarisée par brasage sur la pièce endommagée (2) et un matériau de superalliage (6s) apparaissant en surface de la préforme (2a),
- une étape de mise en contact de la face de brasure (6b) de la préforme (2a) avec la zone (20) de la pièce à recharger (2),
- une étape de brasage consistant à chauffer la préforme (2a) et la pièce endommagée (2) dans un four approprié à une température au moins égale à la température de fusion de la face de brasure (6b), de manière à recharger la pièce endommagée (2) par un ancrage des éléments fondants de la brasure par diffusion dans la pièce endommagée (2).

2. Procédé de rechargement selon la revendication 1, dans lequel le cycle de frittage flash est réglé en température, en pression et en durée avec une montée en température d'au moins 600°C/min, un palier de température sensiblement entre 1000 et 2000°C et un palier de pression sensiblement entre 10 et 100 MPa.

3. Procédé de rechargement selon l'une quelconque des revendications précédentes, dans lequel une couche de protection métallique (62) et une barrière thermique (63) sont déposées sur la couche de superalliage (61) pendant ladite étape préparatoire.

4. Procédé de rechargement selon la revendication 3, dans lequel la couche de protection métallique (62) est constituée d'au moins une feuille de matrice de composition Ni, Pt, Hf, Y, Si, Cu, Ag et/ou Au, et/ou de compositions Ni-Al, Ni-Pt-Al et/ou Ni-Al-Zr.

5. Procédé de rechargement selon l'une des revendications 3 ou 4, dans lequel la barrière thermique (63) est composée de zircone stabilisée à l'Yttrine.

## Patentansprüche

1. Verfahren zur lokalen Reparatur eines zu reparierenden beschädigten Superlegierungsteils (2), **dadurch gekennzeichnet, dass** es chronologisch die folgenden Schritte umfasst:
- einen Vorbereitungsschritt, bestehend aus:
• einem Herstellen einer Form (7) in einer Einschlussmatrize (11) für Spark-Plasma-Sintern, wobei die Form (7) zum Formen einer Vorform (2a) zur Reparatur des beschädigten Teils (2) durch Spark-Plasma-Sintern vorgesehen ist,
• einem Einbringen einer mehrschichtigen Anordnung (6), die aus einer Lötpulverschicht (60) und zumindest einer Schicht (61) auf Basis eines Superlegierungspulvers gebildet ist, in die Form (7),
- einen Sinterschritt, bestehend aus einem Druckbeaufschlagen und einem Auslösen eines Impulsstromdurchgangs, der einen schnellen Temperaturanstieg gemäß eines temperatur-, druck- und zeitgeregelten Spark-Plasma-Sinterzyklus mit zumindest einer Temperaturstufe und einer Druckstufe herbeiführt, wobei dieser Sinterschritt der mehrschichtigen Anordnung (6) zum Formen einer Vorform (2a) führt, die Zusammensetzungsgradienten (G3, G4, G5) in der auf diese Weise gesinterten mehrschichtigen Anordnung (6) aufweist, wobei die Vorform (2a) eine Lötseite (6b), die dazu geeignet ist, durch Löten auf dem beschädigten Teil (2) verbunden zu werden, und ein Superlegierungsmaterial (6s), das auf einer Oberfläche der Vorform (2a) auftaucht, aufweist,
- einen Schritt eines Inkontaktbringens der Lötseite (6b) der Vorform (2a) mit der Zone (20) des zu reparierenden Teils (2),
- einen Lötschritt, bestehend aus einem Erhitzen der Vorform (2a) und des beschädigten Teils (2) in einem geeigneten Ofen auf eine Temperatur, die zumindest gleich der Schmelztemperatur der Lötseite (6b) ist, sodass das beschädigte Teil (2) durch eine Verankerung der Flussmittelelemente des Lötens durch Diffusion in das beschädigte Teil (2) repariert wird.

2. Verfahren zur Reparatur nach Anspruch 1, wobei der Spark-Plasma-Sinterzyklus temperatur-, druck- und zeitgeregelt ist, mit einem Temperaturanstieg von zumindest 600 °C/min, einer Temperaturstufe im Wesentlichen zwischen 1.000 und 2.000 °C und einer Druckstufe im Wesentlichen zwischen 10 und 100 MPa.

3. Verfahren zur Reparatur nach einem der vorstehenden Ansprüche, wobei eine metallische Schutzschicht (62) und eine thermische Barriere (63) während des Vorbereitungsschritts auf der Superlegierungsschicht (61) aufgebracht werden.

4. Verfahren zur Reparatur nach Anspruch 3, wobei die metallische Schutzschicht (62) aus zumindest einem Matrizenbogen der Zusammensetzung Ni, Pt, Hf, Y, Si, Cu, Ag und/oder Au, und/oder der Zusammensetzungen Ni-Al, Ni-Pt-Al und/oder Ni-Al-Zr gebildet ist.

5. Verfahren zur Reparatur nach einem der Ansprüche 3 oder 4, wobei die thermische Barriere (63) aus yttriumstabilisiertem Zirkonium zusammengesetzt ist.

## Claims

1. Method for the local repair of a damaged superalloy part (2) to be repaired, **characterised in that** it chronologically comprises the following steps:
- a preparatory step consisting of:
• producing a mould (7) in a flash sintering chamber matrix (11), the mould (7) being intended for the formation by flash sintering of a preform (2a) for repairing the damaged part (2),
• inserting in the mould (7), a multilayer assembly (6) constituted of a layer of brazing powder (60) and at least one superalloy powder-based layer (61),
- a sintering step consisting of pressurising and triggering a pulsed current passage inducing a quick increase in temperature according to a temperature-, pressure- and duration-adjusted flash sintering cycle, with at least one temperature level and a pressure level, this step of sintering the multilayer assembly (6) leading to the formation of a preform (2a) having composition gradients (G3, G4, G5) in the thus sintered multilayer assembly (6), said preform (2a) having a brazing face (6b) capable of being secured by brazing on the damaged part (2) and a superalloy material (6s) appearing at the surface of the preform (2a),
- a step of putting the brazing face (6b) of the preform (2a) in contact with the zone (20) of the part to be repaired (2),
- a brazing step consisting of heating the preform (2a) and the damaged part (2) in a furnace suitable for a temperature at least equal to the melting temperature of the brazing face (6b), so as to repair the damaged part (2) by anchoring the melting elements of the brazing by diffusion in the damaged part (2).

2. Repair method according to claim 1, wherein the flash sintering cycle is temperature-, pressure- and duration-adjusted with an increase in temperature of at least 600 °C/min, a temperature level substantially between 1000 and 2000 °C and a pressure level substantially between 10 and 100 MPa.

3. Repair method according to any of the preceding claims, wherein a protective metal layer (62) and a thermal barrier (63) are deposited on the superalloy layer (61) during said preparatory step.

4. Repair method according to claim 3, wherein the protective metal layer (62) is constituted of at least one Ni, Pt, Hf, Y, Si, Cu, Ag and/or Au composition matrix sheet, and/or Ni-AI, Ni-Pt-AI and/or Ni-AI-Zr compositions.

5. Repair method according to any of claims 3 or 4, wherein the thermal barrier (63) is composed of yttria-stabilised zirconia.
